# EUROPÄISCHE PATENTSCHRIFT

(11) **EP 3 180 116 B1**
(45) Veröffentlichungstag und Bekanntmachung des Hinweises auf die Patenterteilung: **09.12.2020**
(21) Anmeldenummer: 15786863.9
(22) Anmeldetag: 09.10.2015
(51) Int. Cl.: B01F 13/08, H02K 5/128

(54) **MISCHVORRICHTUNG MIT EINEM RÜHRELEMENT, EINE ANTRIEBSVORRICHTUNG ZUM ANTREIBEN EINES RÜHRELEMENTS IN EINER MISCHVORRICHTUNG, EIN MISCHVORRICHTUNGSSYSTEM UND EIN VERFAHREN ZUM ANTREIBEN EINES RÜHRELEMENTS IN EINER MISCHVORRICHTUNG**
MIXING DEVICE HAVING A STIRRING ELEMENT, A DRIVE DEVICE FOR DRIVING A STIRRING ELEMENT IN A MIXING DEVICE, A MIXING DEVICE SYSTEM AND A METHOD FOR DRIVING A STIRRING ELEMENT IN A MIXING DEVICE
DISPOSITIF MÉLANGEUR MUNI D'UN ÉLÉMENT AGITATEUR, DISPOSITIF D'ENTRAÎNEMENT SERVANT À ENTRAÎNER UN ÉLÉMENT AGITATEUR DANS UN DISPOSITIF MÉLANGEUR, SYSTÈME DE DISPOSITIF MÉLANGEUR ET PROCÉDÉ PERMETTANT L'ENTRAÎNEMENT D'UN ÉLÉMENT AGITATEUR DANS UN DISPOSITIF MÉLANGEUR

(30) Priorität: 20.01.2015 DE 102015000704
(43) Veröffentlichungstag der Anmeldung: 21.06.2017
(73) Patentinhaber: Sartorius Stedim Biotech GmbH, 37079 Göttingen (DE)
(72) Erfinder: ADAMS, Thorsten, 37085 Göttingen (DE)
(74) Vertreter: Vigand, Philippe
(86) Internationale Anmeldenummer: PCT/EP2015/001993
(87) Internationale Veröffentlichungsnummer: WO 2016/116117

(56) Entgegenhaltungen:
- EP-A1- 0 612 135
- EP-A1- 2 590 302
- WO-A1-2005/068059
- DE-A1- 4 438 132
- GB-A- 1 129 166
- US-A- 3 554 497
- US-A- 4 199 265
- US-A1- 2010 008 182
- US-A1- 2015 003 189
- US-B1- 6 306 658

## Beschreibung

Die vorliegende Erfindung betrifft eine Mischvorrichtung mit einem Rührelement, eine Antriebsvorrichtung zum Antreiben eines Rührelements in einer Mischvorrichtung, ein Mischvorrichtungssystem und ein Verfahren zum Antreiben eines Rührelements in einer Mischvorrichtung.

Aus dem U.S. Patent US 7,357,567 B2 ist eine Mischvorrichtung mit einem Rührelement bekannt, das rotierbar in einem Behälter der Mischvorrichtung gelagert ist. Das Rührelement weist einen Lagerstab auf, an dem sich eine Vielzahl von Flügelelementen zum Mischen von Fluiden angeordnet ist. An einem freien Ende des Lagerstabs, welches benachbart zu einer Behälterwand angeordnet ist, befindet sich ein Dauermagnet. Dieser ist mit einem Antriebsmagnet außerhalb der Mischvorrichtung magnetisch gekoppelt. Wird der Antriebsmagnet mittels eines Elektromotors in Rotation versetzt, wird in Folge der Dauermagnet zusammen mit dem Lagerstab und den Flügelelementen ebenfalls in Rotation versetzt.

Die hierzu verwendete Mischvorrichtung wird üblicherweise als Einweg-Mischvorrichtung ausgebildet, so dass nach Verwendung der Mischvorrichtung, die Mischvorrichtung zusammen mit dem Rührelement entsorgt werden kann.

Die Herstellung von Dauermagneten, welche in dem Rührelement enthalten sind und mit dem Rührelement und der Mischvorrichtung entsorgt werden, ist jedoch kostenintensiv.

WO 2005/068059 A1 beschreibt einen Mischbeutel zur Verwendung in Bioprozessen, bei denen ein Fluid aufgenommen und unter Verwendung eines von einer externen Bewegungseinrichtung angetriebenen internen Fluid-Rührelements gerührt wird. Der Beutel kann eine integrierten Einblaseinrichtung und einen Sensorempfänger umfassen.

US 2015/003189 A1 beschreibt eine magnetische Mischanordnung und ein Mischsystem. Hierbei umfasst die Mischanordnung eine Basis, ein magnetisches Laufrad, wobei das magnetische Laufrad ein drehbares Element mit einem Magnetelement umfasst, eine Mehrzahl von Klingen, einen Käfig, welcher teilweise das magnetische Laufrad begrenzt, wobei der Käfig mit der Basis verbunden ist, wobei der Käfig und die Basis einen ersten Hohlraum bilden, und wobei das magnetische Laufrad physisch von dem Käfig und/oder der Basis entkoppelt ist.

EP 0 612 135 A1 beschreibt eine Schwenkvorrichtung für einen Rotor eines Motors, wobei der Rotor an seinen beiden Enden ein Endstück oder einen Ring, ein vorderes Endstück oder einen Ring und ein hinteres Endstück oder Ring aufweist, welche dadurch gekennzeichnet ist, daß der Rotor in ein Fluid eingetaucht ist, das in einer Kammer enthalten ist, während der Durchmesser jedes Rings geringfügig kleiner ist als der Durchmesser der Kammer im Bereich des genannten Rings eine Art und Weise, dass der Rotor in Ruhestellung in der Kammer mittels der Endringe abgestützt ist, während in Rotation ein Fluidfilm zwischen den Außenflächen der Ringe und der Innenfläche der Kammer entsteht, hydrodynamische Auflagefläche.

GB 1 129 166 A beschreibt Pumpen, Mischer oder Rührwerke, die eine elektromagnetische oder Permanentmagnet-Kupplung umfassen. Bei einer derartigen Vorrichtung ist die Antriebswelle normalerweise in Gleitlagern aus Kohlenstoff, Graphit oder Kunststoff gelagert, wobei die Lager durch die bewegte oder gepumpte Flüssigkeit geschmiert werden, und diese Flüssigkeit wird manchmal als Medium verwendet, um die durch die magnetische Kupplung erzeugte Hitze abzuleiten.

EP 2 590 302 A1 beschreibt einen Motor umfassend einen drehbaren Rotor mit in Umfangsrichtung des Rotors angeordneten Magneten und einen den Magneten zugewandten Stator mit Magnetpolen. Jeder Magnetpol umfasst einen Magnetpol-Basisabschnitt und verlängerte Abschnitte, die sich von dem Magnetpol-Basisabschnitt in einer axialen Richtung des Rotors erstrecken. Zumindest die verlängerten Abschnitte der Magnetpole bestehen aus gestapelten Platten.

DE 44 38 132 A1 beschreibt eine Spaltrohrpumpe mit einem die Pumpe antreibenden Motor, bei dem zwischen dem Rotor und dem Ständer ein Spaltrohr, insbesondere ein Spalttopf, angeordnet ist, wobei das Spaltrohr die Ständerwicklung trägt.

Es ist daher Aufgabe der vorliegenden Erfindung eine alternative Antriebsmöglichkeit für ein Rührelement in einer Mischvorrichtung bereitzustellen, welche kostengünstig ist und insbesondere sterile Bedingungen in einer Mischvorrichtung nicht negativ beeinflusst.

Diese Aufgabe wird durch die Merkmale der unabhängigen Ansprüche gelöst. Bevorzugte Ausführungsformen der Erfindung sind Gegenstand der abhängigen Ansprüche.

Gemäß einem Aspekt wird eine Mischvorrichtung mit einem Rührelement bereitgestellt, welche umfasst:
- einen Behälter zum Aufnehmen von Fluiden und/oder Feststoffen;
- zumindest ein rotierbares Rührelement zum Mischen der Fluide und/oder Feststoffe;
- zumindest ein Lagerelement zum Lagern des Rührelements;
wobei das Rührelement zumindest ein nicht-permanentmagnetisiertes Element umfasst, um durch von außen induzierte Reluktanzkräfte in Rotationsbewegung versetzbar zu sein.

Die Verwendung von zumindest einem nicht-permanentmagnetisierten Element in dem Rührelement ermöglicht, die Herstellung eines Rührelements mit einem einfachen Aufbau. Insbesondere erfordern nicht-permantmagnetisierte Elemente keine besondere Bearbeitung, so dass die Herstellung bzw. Bereitstellung eines nicht-permantmagnetisierten Elements sowohl Zeit als auch Kosten einspart. Weiterhin können mittels von außen induzierten Reluktanzkräften, die das Rührelement in Rotation versetzen, jegliche Antriebselemente vermieden werden, die ein Durchdringen der Behälterwand erforderlich machen. Hierdurch können insbesondere sterile Bedingungen, die in der Mischvorrichtung gegebenenfalls herrschen, zuverlässig erhalten werden. Ferner ist es aufgrund des Reluktanzantriebs nicht notwendig, an dem Rührelement bzw. innerhalb der Mischvorrichtung ein oder mehrere Permanentmagnete bzw. elektrische Wicklungen für den Antrieb des Rührelements vorzusehen, so dass die Mischvorrichtung zuverlässig und kostengünstig mit einer Rührfunktionalität versehen werden kann. Als nicht-permanentmagnetisiertes Element eignen sich insbesondere Elemente aus hochpermeablen (z.B. mit einer Permeabilitätszahl µr > 4, bevorzugt µr > 100, besonders bevorzugt µr > 300) und/oder weichmagnetischen Materialien beispielsweise Eisenkerne und/oder Elektrobleche bzw. -bänder. Weiterhin eignen sich Eisen, Nickel, Cobalt, Legierungen aus den voran beschriebenen Materialien, Legierungen, die eines der voran beschriebenen Materialien und mindestens ein weiteres Element enthalten, und Ferrite.

Das Lagerelement ist als Lagerstab ausgebildet, welcher in einen Innenraum des Behälters vorragt und in das Rührelement zumindest teilweise einsetzbar ist, um als Drehlager zu wirken.

Das Rührelement umfasst einen Basiskörper und eine Vielzahl von Flügelelementen, welche an dem Basiskörper angeordnet sind und dazu ausgelegt sind, die Fluide und/oder Feststoffe in dem Behälter durch Rotation des Rührelements zu mischen.

Vorzugsweise ist der Basiskörper im Wesentlichen zylindrisch ausgebildet. Der Basiskörper weist an einer Mantelfläche des Basiskörpers zumindest ein Paar von Polvorsprüngen auf, welche an entgegengesetzten Seiten des Basiskörpers angeordnet sind.

Als "Mantelfläche" wird hierbei die Fläche des Basiskörpers verstanden, welche sich um eine Rührelement-Rotationsachse des Rührelements erstreckt.

Erfindungsgemäß ist zumindest in den Polvorsprüngen jeweils eines der nicht-permanentmagnetisierten Elemente angeordnet.

Mit anderen Worten bilden die nicht-permanentmagnetisierten Elemente in einem Paar von Polvorsprüngen Magnetpole, auf die die von außen induzierten Reluktanzkräfte einwirken, um das Rührelement in Rotation zu versetzen.

Vorzugsweise weist der Behälter zumindest eine zylindrische Wandvertiefung auf, in welche der Basiskörper des Rührelements zumindest teilweise eingesetzt ist, wodurch eine zuverlässige Lagerung des Rührelements gewährleistet werden kann. Weiterhin können die die Reluktanzkräfte erzeugenden Elemente in vorteilhafterweise um den Basiskörper herum angeordnet werden.

Darüber hinaus ist es bevorzugt, dass zumindest ein Wandflächenbereich des Behälters, in dem die Wandvertiefung angeordnet ist, starr ausgebildet ist.

Da Einweg-Mischvorrichtungen üblicherweise flexibel ausgestaltet sind, kann mittels eines starren Bereichs, eine zuverlässige Lagerung des Rührelements gewährleistet werden.

Gemäß einem weiteren Aspekt wird eine Antriebsvorrichtung zum Antreiben eines Rührelements in einer Mischvorrichtung beschrieben, welche umfasst:
- ein Statorgehäuse, auf dem die Mischvorrichtung mit zu mischenden Fluiden und/oder Feststoffen aufsetzbar ist;
- zumindest zwei Paar von stromdurchströmbaren Spulen, welche bezüglich einer Statorgehäuse-Rotationsachse paarweise gegenüberliegend angeordnet sind; und
- eine Steuervorrichtung, die dazu ausgelegt ist, dass die Paare von Spulen nacheinander von Strom durchströmt werden, so dass durch im Rührelement induzierte Reluktanzkräfte das Rührelement der Mischvorrichtung antreibbar ist.

Mit anderen Worten weist die Antriebsvorrichtung zumindest zwei Paare von Spulen auf. Die Spulen eines Paares sind einander gegenüberliegend bezüglich einer Statorgehäuse-Rotationsachse angeordnet. Vorzugsweise sind die Spulen der Antriebsvorrichtung somit kreisförmig angeordnet. Mittels einer Steuervorrichtung kann Strom derart gesteuert werden, dass die Paare von Spulen nacheinander von Strom durchströmt werden. Vorzugsweise werden die Paare im Uhrzeigersinn oder gegen den Uhrzeigersinn nacheinander von Strom durchströmt. Das Paar von Spulen, das gerade von Strom durchströmt wird, bildet ein Magnetfeld, das Einfluss auf ein Rührelement in der Mischvorrichtung nehmen kann, sobald sich dieses in dem erzeugten Magnetfeld befindet. Mittels der durch das Magnetfeld induzierten Reluktanzkräfte ist das Rührelement in Rotation versetzbar. Mit anderen Worten kann ein Rührelement in einer Mischvorrichtung lediglich durch von außen auf das Rührelement wirkende Kräfte in Rotation versetzt werden. Jegliche Bauelemente, die die Behälterwand durchdringen, können in der Antriebsvorrichtung vermieden werden, so dass sterile Bedingungen in einer Mischvorrichtung nicht negativ beeinflusst werden. Weiterhin weist die Antriebsvorrichtung keinerlei rotierende Elemente auf, so dass die Gefahr von Partikelbildung vermieden werden kann, welche insbesondere bei einem Einsatz der Antriebsvorrichtung in einem Reinraum problematisch ist. Die Anordnung der Antriebsvorrichtung in einem staubdichen Gehäuse kann somit verhindert werden.

Vorzugsweise schneiden die Rotationsachsen der Spulen die Statorgehäuse-Rotationsachse im Wesentlichen senkrecht.

Durch eine derartige Anordnung der Spulen können die durch die Paare von Spulen erzeugten Magnetfelder bzw. die hierdurch erzeugten Reluktanzkräfte in besonders vorteilhafter Weise auf ein Rührelement in einer Mischvorrichtung einwirken. Hierdurch kann mit hoher Zuverlässigkeit eine Rotation des Rührelements zum Mischen der Fluide und/oder Feststoffe in der Mischvorrichtung veranlasst werden.

Weiterhin ist es bevorzugt, dass das Statorgehäuse eine Statorvertiefung aufweist, in welche das Rührelement der Mischvorrichtung einsetzbar ist,
wobei die Spulen zumindest teilweise in einer Vertiefungswandung angeordnet sind, die die Statorvertiefung in seitlicher Richtung entlang der Statorgehäuse-Rotationsachse begrenzt.

Die Statorvertiefung ist dabei derart ausgelegt, dass ein Bereich der Mischvorrichtung zusammen mit zumindest einem Teil des Rührelements in der Mischvorrichtung in die Statorvertiefung einsetzbar ist. Die Spulen der Antriebsvorrichtung umgeben hierdurch zumindest teilweise das Rührelement, so dass die induzierten Reluktanzkräfte von den Spulen in vorteilhafter Weise auf das Rührelement wirken können.

In einem weiteren Aspekt wird die zugrundeliegende Aufgabe durch ein Mischvorrichtungssystem gelöst, welches umfasst:
- eine Mischvorrichtung gemäß einem der Ausführungsformen des oben erläuterten Aspekts; und
- eine Antriebsvorrichung gemäß einem der Ausführungsformen des oben erläuterten Aspekts;
wobei eine Rührelement-Rotationsachse und die Statorgehäuse-Rotationsachse identisch sind.

Vorzugsweise ist die Anzahl der Paare von Spulen in der Antriebsvorrichtung größer als die Anzahl der Paare von Polvorsprüngen.

Hierdurch kann gewährleistet werden, dass sich das Rührelement zu keiner Zeit in einem Zustand bzw. in einer Position befinden kann, in dem/der das Rührelement keinerlei Rotationsantrieb mehr erfährt, da es bereits den Zustand erreicht hat, in dem das Magnetfeld am größten ist bzw. die Reluktanz am kleinsten ist.

Ferner wird die zugrunde liegende Aufgabe durch ein Verfahren zum Antreiben eines Rührelements in einer Mischvorrichtung gemäß Anspruch 9 gelöst, welches umfasst:
- Bereitstellen einer Mischvorrichtung mit einem Rührelement, welches rotierbar in der Mischvorrichtung gelagert ist und zumindest einen nicht-permanentmagnetisiertes Element umfasst;
- Bereitstellen einer Antriebsvorrichtung zum Antreiben des Rührelements mit Paaren von Spulen, welche bezüglich einer Antriebsvorrichtungs-Rotationsachse gegenüberliegend angeordnet sind; und
- Aufsetzen der Mischvorrichtung auf die Antriebsvorrichtung, so dass, wenn die Paare von Spulen sequenziell von Strom durchströmt werden, Reluktanzkräfte auf das Rührelement einwirken und dieses in Rotation versetzen.

Diese und andere Aufgaben, Merkmale und Vorteile der vorliegenden Erfindung werden aus dem Studium der folgenden detaillierten Beschreibung bevorzugter Ausführungsformen und der beiliegenden Zeichnungen deutlicher. Es ist ersichtlich, dass, obwohl Ausführungsformen separat beschrieben werden, einzelne Merkmale daraus zu zusätzlichen Ausführungsformen kombiniert werden können.
- Fig. 1: zeigt eine Mischvorrichtung mit einem eingesetzten Rührelement;
- Fig. 2a): zeigt eine Schnittansicht durch das Rührelement;
- Fig. 2b): zeigt eine Schnittansicht durch den Basiskörper des Rührelements senkrecht zur Rührelement-Rotationsachse;
- Fig. 3a): zeigt eine Schnittansicht durch eine Ausführungsform einer Mischvorrichtung, die auf eine Antriebsvorrichtung aufgesetzt ist entlang einer Rührelement-Rotationsachse bzw. einer Statorgehäuse-Rotationsachse;
- Fig. 3b): zeigt eine Schnittansicht durch die Ausführungsform der Fig. 3a entlang einer Richtung senkrecht zur Rührelement-Rotationsachse bzw. der Statorgehäuse-Rotationsachse;
- Fig. 4: zeigt eine Schnittansicht durch eine Mischvorrichtung, in dem das Rührelement auf einem Kugellager gelagert ist;
- Fig. 5: zeigt eine Schnittansicht durch eine Mischvorrichtung mit einem Verrastungsmechanismus zur Verrastung des Rührelements mit der Behälterwandung der Mischvorrichtung und einem Lagerstab-Kugellager;
- Fig. 6: zeigt eine Schnittansicht durch eine Mischvorrichtung mit weiteren Ausführungsformen zur Lagerung des Rührelements; und
- Fig. 7: zeigt eine Schnittansicht durch eine Mischvorrichtung mit einer alternativen Anordnung der Spulen in der Antriebsvorrichtung.

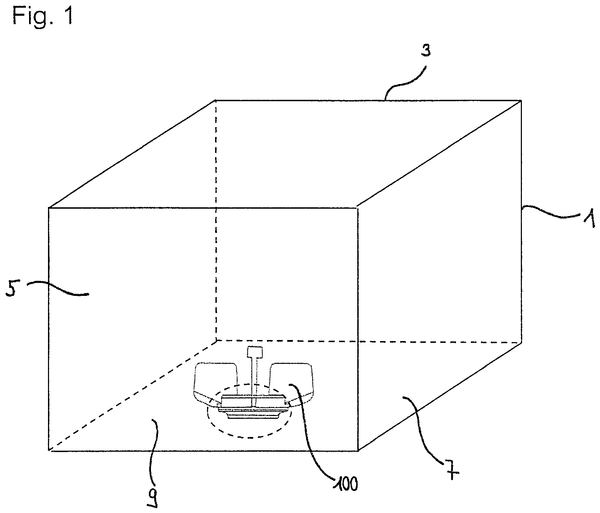

**Figur 1** zeigt eine Mischvorrichtung 1 gemäß einer bevorzugten Ausführungsform. Die Mischvorrichtung kann beispielsweise ein Bioreaktor sein, in dem beispielsweise Fluide und/oder Feststoffe zur Kultivierung von Zellkulturen vermischt werden.

Die Mischvorrichtung 1 weist einen Behälter 3 zum Aufnehmen von zumindest einem Fluid und/oder zumindest einem Feststoff auf. Der Behälter 3 kann starr oder als flexible Tasche ausgebildet sein. Insbesondere kann die Mischvorrichtung 1 wiederverwendbar oder als Einweg-Mischvorrichtung ausgelegt sein.

Bei sterilen Anwendungen wird, bevor die zu mischenden Fluide und/oder Feststoffe in den Behälter 3 eingefüllt werden, vorzugsweise ein Innenraum 5 des Behälters 3 sterilisiert. Dies kann jedoch auch bereits im Rahmen des Herstellungsprozesses der Mischvorrichtung 1 erfolgen. Der Behälter 3 weist eine geschlossene Wandfläche auf, die lediglich durch spezielle Zuführ- und/oder Abführöffnungen (nicht gezeigt) unterbrochen wird, über die ein oder mehrere Fluide bzw. Feststoffe zugeführt und/oder abgeführt werden können. Derartige Öffnungen sind jedoch so ausgelegt, dass die sterilen Bedingungen in dem Innenraum 5 nicht beeinflusst werden.

Im Innenraum 5 des Behälters 3 ist zumindest ein Rührelement 100 zum Mischen von einzelnen in dem Behälter 3 enthaltenen Fluiden bzw. Feststoffen angeordnet. Das Rührelement 100 kann dabei an jeder Position der Behälterwandung 7 angeordnet sind. Vorzugsweise befindet sich das Rührelement 100 jedoch an einer Behälterbodenfläche 9.

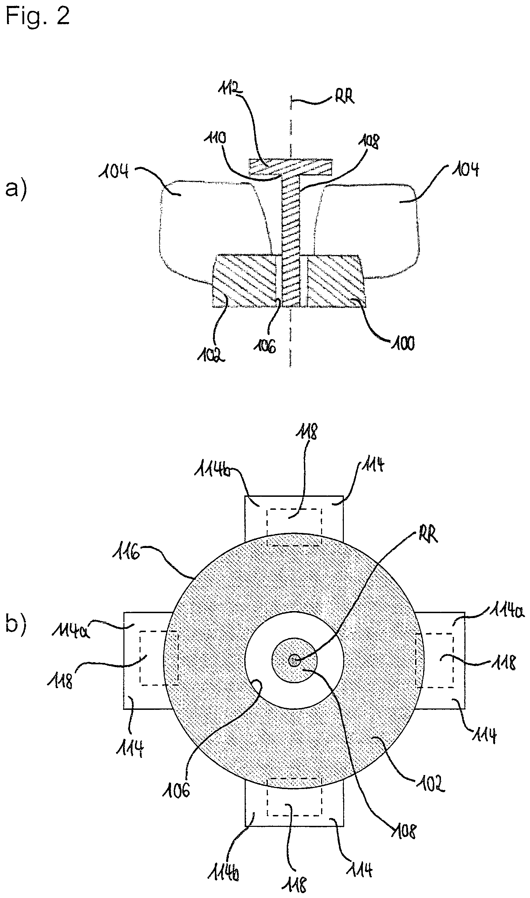

Anhand von **Figur 2a****)** wird im Folgenden das Rührelement 100 näher spezifiziert.

Das Rührelement 100 weist einen Basiskörper 102 auf, der vorzugsweise im Wesentlichen zylindrisch ausgebildet ist. An dem Basiskörper 102 sind eine Vielzahl von Rühr- bzw. Flügelelementen 104 angeordnet, welche um eine Rührelement-Rotationsachse RR angeordnet sind. Die Flügelelemente 104 sind vorzugsweise als im Wesentlichen plattenförmige Elemente ausgebildet, welche vorzugsweise sternförmig um die Rührelement-Rotationsachse RR angeordnet sind.

Vorzugsweise sind die Abstände zwischen den einzelnen Flügelelementen 104 gleich groß. Es ist jedoch auch möglich, dass die Abstände voneinander variieren. Als "plattenförmig" wird hierbei eine im Wesentlichen flache Bauweise verstanden. "Plattenförmig" ist jedoch nicht darauf beschränkt, dass die Flügelelemente 104 eben ausgebildet zu sein haben. Es ist ebenfalls möglich, dass die Flügelelemente 104 gebogen (z.B. in Form einer Schraube) ausgebildet sind. Die Flügelelemente 104 können abgerundete Kanten, wie in Figur 2a) gezeigt, oder eckige Kanten aufweisen. Insbesondere können die Flügelelemente 104 parallel zur Rührelement-Rotationsachse RR ausgerichtet sein oder um einen bestimmten Winkel zu der Rührelement-Rotationsachse RR gekippt sein.

Der Basiskörper 102 weist ein Basiskörper-Durchtrittsloch 106 auf, das im Mittelpunkt des Basiskörpers 102 angeordnet ist und den Basiskörper 102 in Richtung der Rührelement-Rotationsachse RR durchdringt. In dieses Basiskörper-Durchtrittsloch 106 ist ein Lagerelement, das die Form eines Lagerstabs 108 aufweist, zumindest teilweise angeordnet. Mit Hilfe des Lagerstabs 108 ist das Rührelement 100 an dem Behälter 3 der Mischvorrichtung 1 befestigt bzw. ortsfest angeordnet und an diesem drehbar um die Rührelement-Rotationsachse RR gelagert. An einem ersten freien Ende 110 des Lagerstabs 108 ist ein Begrenzungselement 112 angeordnet, das vorzugsweise im Wesentlichen zylindrisch ausgebildet ist. Der Durchmesser des Begrenzungselements 112 ist bevorzugt größer als der Durchmesser des Lagerstabs 108. Insbesondere ist der Durchmesser des Begrenzungselements 112 derart groß, dass das Begrenzungselement 112 zumindest teilweise die Flügelelemente 104 überlappt. Hierdurch kann gewährleistet werden, dass das Rührelement sicher gelagert ist und nicht von dem Lagerstab 108 herunter rutschen kann. Das Begrenzungselement 112 und der Lagerstab 108 können miteinander verbunden oder einstückig ausgebildet sein.

Alternativ ist das Begrenzungselement 112 derart angeordnet, dass es den Basiskörper 102 überlappt, um ein Herunterrutschen des Rührelements 100 von dem Lagerstab 108 zu verhindern.

**Figur 2b****)** zeigt eine Schnittansicht des Basiskörpers 102, in der der Basiskörper 102 in einer Richtung im Wesentlichen senkrecht zur Rührelement-Rotationsachse RR geschnitten ist. In dieser Ansicht wird deutlich, dass der vorzugsweise zylindrische Basiskörper 102 ferner zumindest ein Paar von Zähnen bzw. Polvorsprüngen 114 aufweist. Diese Polvorsprünge 114 sind an einer Mantelfläche 116 des Basiskörpers 102 ausgebildet, wobei die Polvorsprünge 114 vorzugsweise einstückig mit dem Basiskörper 102 ausgebildet sind.

Die Polvorsprünge 114 eines Paares von Polvorsprüngen 114 sind an im Wesentlichen entgegengesetzten Seiten des Basiskörpers 102 angeordnet. Figur 2b) zeigt eine Ausführungsform mit zwei Paaren von Polvorsprüngen 114, wobei das erste Paar von Polvorsprüngen mit 114a bezeichnet ist und das zweite Paar von Polvorsprüngen mit 114b. Vorzugsweise sind die Abstände zwischen den einzelnen Polvorsprüngen 114 entlang der Umfangsrichtung im Wesentlichen gleich. Es ist jedoch auch möglich, dass die Abstände zwischen den Polvorsprüngen 114 voneinander variieren.

Der Basiskörper 102 sowie die Flügelelemente 104, der Lagerstab 108 und das Begrenzungselement 112 sind vorzugsweise aus Kunststoff gefertigt.

In den Polvorsprüngen 114 ist jeweils zumindest ein nicht-permanentmagnetisiertes Element 118 angeordnet. Dieses kann beispielsweise aus einem ferromagnetischen Material wie Eisen gebildet sein. Als nicht-permanentmagnetisiertes Element eignet sich insbesondere ein Element aus hochpermeablen (z.B. mit einer Permeabilitätszahl µr > 4, bevorzugt µr > 100, besonders bevorzugt µr > 300) und/oder weichmagnetischen Materialien beispielsweise ein Eisenkern und/oder Elektroblech bzw. -band (insbesondere nach der Norm EN 10106 "Kaltgewalztes nicht kornorientiertes Elektroblech und -band im schlussgeglühten Zustand" bzw. insbesondere nach der Norm EN 10106 "Kornorientiertes Elektroblech und -band im schlussgeglühten Zustand") z.B. aus kaltgewaltzen Eisen-Silizium-Legierungen. Das nicht-permanentmagnetisierte Element 118 ist dabei insbesondere derart in den Polvorsprüngen 114 angeordnet, dass das nicht-permanentmagnetisierte Element 118 von dem Material des Polvorsprungs 114 nach außen hin überdeckt ist. Mit anderen Worten sind die nicht-permanentmagnetisierten Elemente 118 in die Polvorsprünge 114 eingebettet, so dass keines der Fluide bzw. Feststoffe in dem Innenraum 5 der Mischvorrichtung 1 mit dem nicht-permanentmagnetisierten Material in Kontakt kommen kann und mit diesem reagiert.

Das nicht-permanentmagnetisierte Element 118 kann dabei vollständig in dem entsprechenden Polvorsprung 114 angeordnet sein oder zumindest teilweise in diesen hineinragen.

Es ist jedoch ebenfalls denkbar, dass der Basiskörper 102 keine Polvorsprünge 114 aufweist und die nicht-permanentmagnetisierten Elemente 118 innerhalb des zylindrischen Basiskörpers 102 angeordnet sind. Die Anordnung der nicht-permanentmagnetisierten Elemente 118 innerhalb des Basiskörpers 102 ist entsprechend der Ausführungsform mit Polvorsprüngen 114. Die nicht-permanentmagnetisierten Elemente 118 sind hier lediglich in den Basiskörper 102 bezüglich der Rührelement-Rotationsachse RR rückgesetzt.

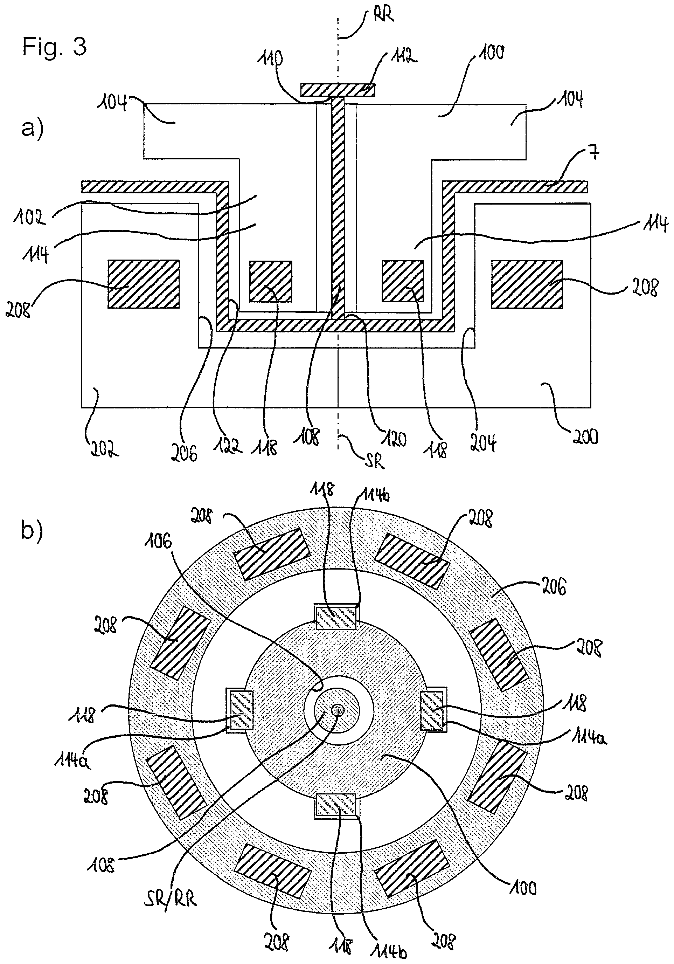

**Figur 3a****)** zeigt eine Schnittansicht des Rührelements 100, in der das Rührelement 100 entlang der Rührelement-Rotationsachse RR durch ein Paar von Polvorsprüngen 114 geschnitten ist. Ferner ist in der Schnittansicht ein Teilbereich der Behälterwandung 7 der Mischvorrichtung 1 zu sehen, an dem das Rührelement 100 gelagert ist.

Zur Lagerung und Fixierung des Rührelements 100 ist ein zweites freies Ende 120 des Lagerstabs 108 des Rührelements 100, welches dem ersten freien Ende 110 entgegengesetzt ist, an der Behälterwandung 7 der Mischvorrichtung 1 befestigt. Zur Befestigung eignen sich Kleben, Schweißen, ein Verrastungsmechanismus, ein Bajonett-Verschluss, ein Schraubmechanismus, etc. Vorzugsweise ragt der Lagerstab 108 im befestigten Zustand senkrecht zur Behälterwandung 7 in den Innenraum 5 der Mischvorrichtung 1.

Ist der Behälter 3 der Mischvorrichtung 1 als flexible Tasche, vorzugsweise aus Kunststoff, ausgebildet, ist es bevorzugt, dass zumindest der Teilbereich der Behälterwandung 7, an dem das Rührelement 100 befestigt ist, starr ausgebildet ist. Dies kann dadurch erfolgen, dass die Wandstärke in diesem Teilbereich dicker ausgebildet ist. Alternativ oder zusätzlich kann eine verstärkende Schicht mit im Wesentlichen starren Eigenschaften in diesem Teilbereich auf die Behälterwandung 7 aufgetragen bzw. an dieser befestigt bzw. angeordnet sein.

Ferner weist die Behälterwandung 7, wie in Figur 3a) gezeigt, in dem Teilbereich, in dem das Rührelement 100 gelagert ist, eine Wandvertiefung 122 auf. Diese ist vorzugsweise im Wesentlichen zylindrisch ausgebildet, so dass der Basiskörper 102 des Rührelements 100 zumindest teilweise in die Wandvertiefung 122 einsetzbar ist. Hierzu ist der Durchmesser der Wandvertiefung 122 größer als der Abstand zwischen zwei äußeren Enden entgegengesetzter Polvorsprünge 114. Insbesondere ist der Durchmesser der Wandvertiefung 122 derart zu wählen, dass eine Rotation des Rührelements 100 in der Wandvertiefung 122 möglich ist.

Weiterhin ist in Figur 3a) ein Schnitt durch eine Antriebsvorrichtung 200 gezeigt, auf die die Mischvorrichtung 1 zusammen mit dem Rührelement 100 aufgesetzt ist und mittels dem das Rührelement 100 durch Reluktanz in Rotation versetzbar ist.

Die Antriebsvorrichtung 200 weist ein Statorgehäuse 202 mit einer Statorvertiefung 204 auf, die derart ausgebildet ist, dass die Wandvertiefung 122 des Behälters 3 der Mischvorrichtung 1 zusammen mit dem Basiskörper 102 des Rührelements 100 zumindest teilweise in die Statorvertiefung 204 einsetzbar ist. Vorzugsweise ist die Statorvertiefung 204 ebenfalls zylindrisch bezüglich einer Statorgehäuse-Rotationsachse SR ausgebildet, so dass die Statorgehäuse-Rotationsachse SR mit der Rührelement-Rotationsachse RR zusammenfällt, wenn die Mischvorrichtung 1 auf die Antriebsvorrichtung 200 aufgesetzt ist.

Die Statorvertiefung 204 weist eine Vertiefungswandung 206 auf, welche die Behälterwandung 7 der Mischvorrichtung 1 sowie den Basiskörper 102 des Rührelements 100 um die Statorgehäuse-Rotationsachse SR bzw. Rührelement-Rotationsachse RR herum umgibt.

Zur Verdeutlichung zeigt **Figur 3b****)** eine Schnittansicht durch die Vertiefungswandung 206 und das Rührelement 100 senkrecht zur Statorgehäuse-Rotationsachse SR bzw. Rührelement-Rotationsachse RR. Zur vereinfachten Darstellung ist jedoch die Behälterwandung 7 in dieser Figur nicht gezeigt.

Wie in Figur 3b) gezeigt, sind in der Vertiefungswandung 206 des Statorgehäuses 200 zumindest zwei Paar von Spulen 208 angeordnet. Die Spulen 208 eines Paares sind bezüglich der Statorgehäuse-Rotationsachse SR im Wesentlichen einander gegenüberliegend angeordnet, so dass sie vorzugsweise im Wesentlichen zylindrisch um die zur Statorgehäuse-Rotationsachse SR herum angeordnet sind. Figur 3b) zeigt den speziellen Fall von drei Paaren von Spulen 208. Es sind jedoch auch 2, 4, 5, 6, 7, 8 usw. Paare denkbar.

Mittels einer nicht gezeigten Steuervorrichtung sind die Paare von Spulen 208 derart steuerbar bzw. regelbar, dass diese sequenziell von Strom durchströmbar sind. Mit anderen Worten werden mit Hilfe der Steuervorrichtung die Paare von Spulen 208 im Uhrzeigersinn oder gegen den Uhrzeigersinn nacheinander von Strom durchströmt.

Wird ein Paar von Spulen 208 von Strom durchströmt, bildet sich ein Magnetfeld aus, das sich insbesondere auch zu der Statorgehäuse-Rotationsachse SR bzw. der Rührelement-Rotationsachse RR hin erstreckt. Sobald das Paar von Spulen 208 jedoch nicht mehr von Strom durchströmt wird, verschwindet dieses Magnetfeld wieder. Da jedoch die Steuervorrichtung die Paare von Spulen 208 derart ansteuert, dass nun das benachbarte Paar von Spulen 208 von Strom durchströmt wird, bildet sich ein neues Magnetfeld aus, das jedoch bezüglich der Statorgehäuse-Rotationsachse SR im Uhrzeigersinn oder gegen den Uhrzeigersinn (je nachdem welches benachbarte Paar von Spulen 208 von Strom durchströmt wird) verschoben bzw. versetzt ist. Mit anderen Worten "wandert" das Magnetfeld bezüglich der Statorgehäuse-Rotationsachse SR durch ein sequenzielles Durchströmen von Strom durch die Paare von Spulen 208. Vorzugsweise ist dabei die Stärke von Strom jeweils identisch, um eine gleichmäßige Rotation des Rührelements 100 zu erzielen.

Durch die erzeugten Magnetfelder wirken die Paare von nicht-permanentmagnetisierten Elementen 118, welche sich vorzugsweise in den Paaren von Polvorsprüngen 114a, 114b befinden, als Pole.

Auf diese Pole wirken durch die erzeugten Magnetfelder Reluktanzkräfte, die bewirken, dass das Rührelement 100 durch Rotation einen Zustand zu erreichen sucht, in dem die Reluktanz am geringsten ist. Dies wird dann erreicht, wenn das Paar von nicht-permanentmagnetisierten Elementen 118, das sich in dem Magnetfeld befindet, bezüglich der Statorgehäuse-Rotationsachse SR bzw. der Rührelement-Rotationsachse RR in einer Linie mit dem Paar von Strom durchströmten Spulen 208 ausrichtet.

Insbesondere kann der Antrieb des Rührelements 100 nach dem Prinzip eines Synchron-Reluktanzmotors erfolgen, bei dem der Synchron-Reluktanzmotor einen bewickelten mehrphasigen Stator bzw. Ständer (Antriebsvorrichtung 200 mit Spulen 208) wie eine Asynchronmaschine aufweist. Das als Rotor bzw. Läufer ausgebildete Rührelement 100 ist vorzugsweise nicht rund, sondern weist ausgeprägte Pole bzw. Vorsprünge 114 auf. Bevorzugt wird der Antrieb nach dem Prinzip des Synchron-Reluktanzmotors mittels eines Frequenzumrichters angesteuert. Ferner, kann der Antrieb des Rührelements 100 nach dem Prinzip eines Asynchronmotors mit Reluktanzmoment erfolgen, wobei bei Verzicht auf einen Frequenzumrichter der Motor wie eine Asynchronmaschine insbesondere mit einem Kurzschlusskäfig ausgerüstet ist. Der Antrieb läuft in diesem Fall wie bei einem Asynchronmotor bis in die Nähe der asynchronen Gleichgewichtsdrehzahl an wobei sodann der Reluktanzeffekt überwiegt und der Rotor bzw. das Rührelement 100 sich im Wesentlichen synchron mit dem Drehfeld dreht bzw. rotiert. Denkbar ist ferner, einen frequenzumrichtergespeisten Synchron-Reluktanzmotor als Antrieb des Rührelements 100 einzusetzen. Darüber hinaus kann der Antrieb des Rührelements 100 insbesondere nach dem Prinzip einer geschalteten Reluktanzmaschine (Englisch: *switched reluctance motor,* SRM, bzw. SR-drive) erfolgen, wobei in diesem Fall der Antrieb ähnlich zu den anderen Reluktanzantrieben insbesondere eine unterschiedliche Anzahl ausgeprägter Zähne bzw. Vorsprünge an Rotor (Rührelement 100) und Stator. Die Statorzähne sind insbesondere mit Spulen 208 bewickelt bzw. versehen, die abwechselnd ein- und ausgeschaltet werden, wobei die Zähne mit den bestromten Wicklungen bzw. Spulen 208 jeweils die nächstgelegenen Zähne des Rotors (Pole 114) wie ein Elektromagnet anziehen und abgeschaltet werden, wenn (oder kurz bevor) die Zähne (Pole 114) des Rotors (Rührelement 100) den sie anziehenden Statorzähnen (Spulen 208) gegenüberstehen. In dieser Position wird die nächste Phase auf anderen Statorzähnen bzw. Spulen 208 eingeschaltet, die andere Zähne bzw. Vorsprünge (Pole 114) am Rotor bzw. Rührelement 100 anzieht. Insbesondere hat ein geschalteter Reluktanzmotor drei oder mehr Phasen. Es gibt aber auch Sonderbauformen mit nur zwei oder einer Phase. Um im richtigen Zeitpunkt umzuschalten, wird der Antrieb in der Regel mit einem Rotorlagegeber versehen. Es ist aber auch denkbar, geberlose Steuerverfahren anhand des Statorstroms oder des Drehmomentes einzusetzen. Reluktanzantriebe dieser Bauart zeichnen sich durch hohe Robustheit und einen geringen Bauaufwand aus. Wie Asynchronmaschinen bilden sie im unbestromten Zustand bei Drehung insbesondere kein Drehmoment aus. Eine Restmagnetisierung führt oft dennoch zu einem kleinen Rastmoment im stromlosen Zustand. Ferner kann der Antrieb des Rührelements 100 nach dem Prinzip eines Reluktanz-Schrittmotors erfolgen, wobei der Reluktanz-Schrittmotor im Prinzip gleich wie ein geschalteter Reluktanzmotor aufgebaut sein kann, im Gegensatz jedoch zu diesem ohne Kenntnis der Rotorposition (Rührelement 100) geschaltet wird.

Um eine kontinuierliche Rotation des Rührelements 100 zu erzielen, ist es vorteilhaft, wenn die Anzahl der Paare von nicht-permanentmagnetisierten Elementen 118 kleiner ist als die Anzahl der Paare von Spulen 208. Hierdurch kann gewährleistet werden, dass zu keiner Zeit alle Paare von nicht-permanentmagnetisierten Elementen 118 in einer Linie bezüglich der Statorgehäuse-Rotationsachse SR bzw. der Rührelement-Rotationsachse RR mit einem entsprechenden Paar von Spulen 208 ausgerichtet sind. Somit kann verhindert werden, dass der Zustand der geringsten Reluktanz bereits nach einer Rotationsbewegung erreicht wurde und keine weitere Rotationsbewegung mehr erzielt werden kann.

Je dichter die Paare von Spulen 208 angeordnet sind, desto mehr können ruckartige Rotationsbewegungen vermieden werden.

Ist die Anzahl von Paaren von nicht-permanentmagnetisierten Elementen 118 kleiner als die Anzahl von Paaren von Spulen 208, wird sich das Paar von nicht-permanentmagnetisierten Elementen 118 mit dem Paar von Spulen 208, das gerade von Strom durchströmt wird, in einer Linie ausrichten, das diesem Paar von Spulen 208 gerade am Nächsten gelegen ist.

Die übrigen Paare von nicht-permanentmagnetisierten Elementen 118 sind dann versetzt zu den Paaren von Spulen 208 bzw. sind mit keinem Paar von Spulen 208 in einer Linie ausgerichtet. Wird das Magnetfeld verschoben, indem ein anderes Paar von Spulen 208 mittels der Steuervorrichtung (nicht gezeigt) von Strom durchströmt wird, richtet sich durch die Reluktanzkraft wieder das nächstgelegene Paar von nicht-permanentmagnetisierten Elementen 118 mit dem von Strom durchströmten Paar von Spulen 208 aus. Somit wird durch den Wechsel der Magnetfelder und den nicht-permanentmagnetierten Elementen 118 mittels Reluktanzkräften eine Rotationsbewegung des Rührelements 100 erzeugt.

Hierbei ist es besonders vorteilhaft, dass keine Elemente erforderlich sind, die ein Durchdringen der Behälterwandung 7 erforderlich machen, so dass die sterilen Bedingungen in der Mischvorrichtung 1 erhalten werden können. Ein Antrieb des Rührelements 100 erfolgt folglich lediglich durch die Reluktanzkraft durch die Behälterwandung 7 hindurch.

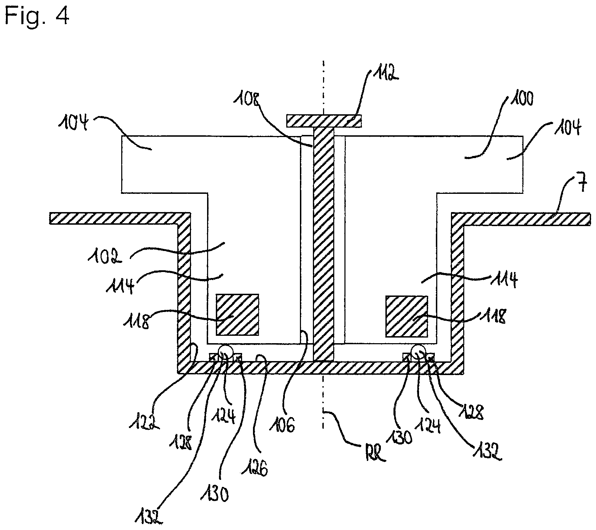

**Figur 4** zeigt eine Schnittansicht durch das Rührelement 100 gemäß einer weiteren Ausführungsform senkrecht zur Rührelement-Rotationsachse RR durch ein Paar von Polvorsprüngen 114. Weiterhin gezeigt ist ein Schnitt durch die Wandvertiefung 122 der Behälterwandung 7 der Mischvorrichtung 1, in der das Rührelement 100 zumindest teilweise angeordnet ist. Bei dem gezeigten Abschnitt der Behälterwandung 7 handelt es sich lediglich um den Teilbereich der Behälterwandung 7, an dem das Rührelement 100 angeordnet ist.

Um eine gleichmäßige und vereinfachte Rotation des Rührelements 100 zu erzielen, kann ein Boden-Kugellager 124 auf einer Wandvertiefungs-Bodenfläche 126 der Wandvertiefung 122 der Mischvorrichtung 1 angeordnet sein. Als "Wandvertiefungs-Bodenfläche" 126 wird hierbei die Fläche der Wandvertiefung 122 angesehen, an der der Lagerstab 108 befestigt ist. Vorzugsweise ist diese Fläche senkrecht zur Rührelement-Rotationsachse RR ausgerichtet.

Das Boden-Kugellager 124 weist hierzu vorzugsweise einen Außenring 128 und einen Innenring 130 auf, deren Mittelpunkte auf der Rührelement-Rotationsachse RR angeordnet sind. Zwischen dem Außenring 128 und dem Innenring 130 sind eine Vielzahl von rollenden Elementen 132, wie z.B. Kugeln, angeordnet, auf denen der Basiskörper 102 des Rührelements 100 aufliegt.

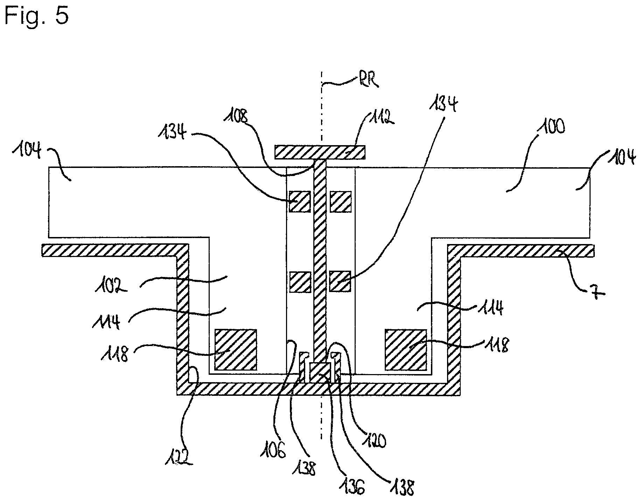

**Figur 5** zeigt eine weitere Ausführungsform zur Lagerung des Rührelements 100, die alternativ oder ergänzend zu der Ausführungsform der Figur 4 angewendet werden kann.

Figur 5 zeigt wiederum eine Schnittansicht durch das Rührelement 100 senkrecht zur Rührelement-Rotationsachse RR durch ein Paar von Polvorsprüngen 114. Weiterhin ist ein Schnitt durch die Wandvertiefung 122 der Behälterwandung 7 der Mischvorrichtung 1 gezeigt, in der das Rührelement 100 zumindest teilweise angeordnet ist. Bei dem gezeigten Abschnitt der Behälterwandung 7 handelt es sich lediglich um den Teilbereich der Behälterwandung 7, an dem das Rührelement 100 angeordnet ist.

In dieser erfindungsgemäßen Ausführungsform ist zumindest ein Lagerstab-Kugellager 134 zwischen dem Lagerstab 108 und dem Basiskörper 102 und/oder den Flügelelementen 104 eingesetzt. Das Lagerstab-Kugellager 134 dient zur Lagerung der rotierenden Elemente des Rührelements 100 um den feststehenden Lagerstab 108.

Die einzelnen Lagerstab-Kugellager 134 können in verschiedenen Höhen bezüglich der Rührelement-Rotationsachse RR angeordnet sein. Figur 5 zeigt beispielsweise eine Ausführungsform mit zwei Lagerstab-Kugellager 134, wobei hier ein Lagerstab-Kugellager 134 zwischen dem Lagerstab 108 und den Flügelelementen 104 angeordnet ist, während das zweite Lagerstab-Kugellager 134 zwischen dem Lagerstab 108 und dem Basiskörper 102 des Rührelements 100 angeordnet ist. Zusätzlich zeigt Figur 5 eine Befestigungsmöglichkeit, mit der der Lagerstab 108 an der Behälterwandung 7 insbesondere befestigt werden kann. Diese kann alternativ oder zusätzlich zu den übrigen Ausführungsformen angewendet werden.

An dem zweiten freien Ende 120 des Lagerstabs 108 ist ein Verrastungselement 136 angeordnet. Dieses weist vorzugsweise einen größeren Durchmesser auf als der Lagerstab 108 und kann einstückig mit dem Lagerstab 108 ausgebildet sein. Alternativ ist das Verrastungselement 136 an dem Lagerstab 108 befestigt, wie in Figur 5 gezeigt.

Das Verrastungselement 136 kann mit einer Vielzahl von Rasthaken 138, welche an der Behälterwandung 7 befestigt sind, einrasten. Sobald das Verrastungselement 136 mit den Rasthaken 138 verhakt ist, umgreifen die Rasthaken 138 das Verrastungselement 136 zumindest teilweise, so dass der Lagerstab 108 und infolgedessen das Rührelement 100 fest bzw. axial mit der Behälterwandung 7 verbunden ist. Um eine Verrastung zu ermöglichen, sind die Rasthaken 138 vorzugsweise rückstellfähig ausgebildet. Die Rasthaken 138 sind vorzugsweise zylindrisch um die Rührelement-Rotationsachse RR herum angeordnet. Alternativ zu einer Vielzahl von Rasthaken 138 ist es jedoch auch denkbar, dass eine um die Rührelement-Rotationsachse RR umlaufende Rastwand ausgebildet ist, mit der das Verrastungselement 136 verrastet.

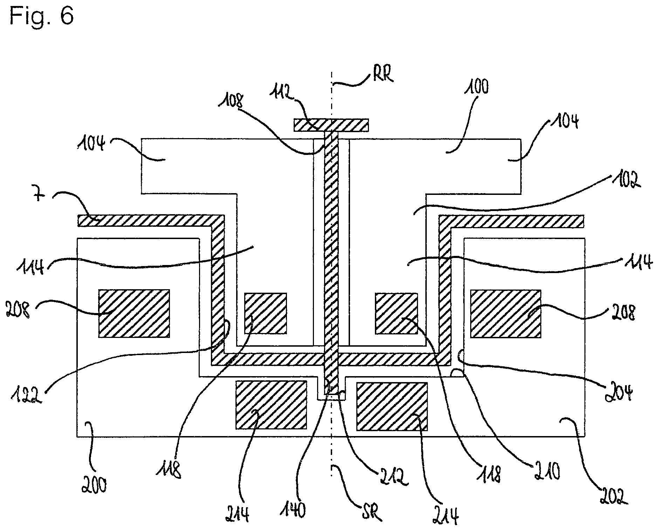

**Figur 6** zeigt wiederum eine Schnittansicht durch das Rührelement 100 senkrecht zur Rührelement-Rotationsachse RR durch ein Paar von Polvorsprüngen 114. Weiterhin ist ein Schnitt durch die Wandvertiefung 122 der Behälterwandung 7 der Mischvorrichtung 1 gezeigt, in der das Rührelement 100 zumindest teilweise angeordnet ist. Bei dem gezeigten Abschnitt der Behälterwandung 7 handelt es sich lediglich um den Teilbereich der Behälterwandung 7, an dem das Rührelement 100 angeordnet ist. Im Gegensatz zu den Figuren 4 und 5 ist in Figur 6 zusätzlich ein Schnitt durch die Antriebsvorrichtung 200 gezeigt, auf der die Mischvorrichtung 1 aufgesetzt ist.

Figur 6 zeigt eine Ausführungsform ähnlich zu der in Figur 3, weist jedoch einen verlängerten Lagerstab 108 auf, der die Behälterwandung 7 der Mischvorrichtung 1 durchdringt. Mit anderen Worten ragt ein Teilstück des Lagerstabs 108 nach außen. Die Länge des herausragenden Teilstücks 140 des Lagerstabs 108 kann dabei frei gewählt werden. Zweck des herausragenden Teilstücks 140 des Lagerstabs 108 ist es, in einer Lagerstabvertiefung 212 angeordnet zu sein, die in einer Statorvertiefungs-Bodenfläche 210 ausgebildet ist. Als "Statorvertiefungs-Bodenfläche" 210 wird die Fläche der Statorvertiefung 204 angesehen, die die Statorgehäuse-Rotationsachse SR im Wesentlichen senkrecht schneidet. Durch ein Einsetzen des herausragenden Teilstücks 140 des Lagerstabs 108 in die Lagerstabvertiefung 212 kann eine zusätzliche Positionsverrastung der Mischvorrichtung 1 auf dem Statorgehäuse 202 bereitgestellt werden.

Um die sterilen Bedingungen in dem Mischvorrichtung 1 jedoch durch den verlängerten Lagerstab 108, der die Behälterwandung 7 durchdringt, insbesondere nicht negativ zu beeinflussen, ist die Behälterwandung 7 mit dem Lagerstab 108 fluiddicht verbunden.

Zusätzlich oder alternativ können eine oder mehrere Lagerungsspulen 214 unterhalb der Statorvertiefungs-Bodenfläche 210 des Statorgehäuses 202 angeordnet sein.

Insbesondere sind die Lagerungsspulen 214 unterhalb der nicht-permanentmagnetisierten Elemente 118 in dem Rührelement 100 anzuordnen, wenn die Mischvorrichtung 1 auf dem Statorgehäuse 202 aufgesetzt ist.

Die Lagerungsspulen 214 können mittels der Steuervorrichtung (nicht gezeigt) derart von Strom durchströmt werden, dass die Pole der Lagerungsspulen 214 identisch mit den Polen der nicht-permanentmagentisierten Elementen 118 ausgerichtet sind. Hierdurch erfahren die nicht-permanentmagnetisierten Elemente 118 eine abstoßende Kraft, so dass die nicht-permanentmagnetisierten Elemente 118 zusammen mit dem Rührelement 100 angehoben werden. Lediglich der Lagerstab 108 zusammen mit dem Begrenzungselement 108 bleiben fixiert und dienen somit als Begrenzung, um insbesondere eine Anhebebewegung des Rührelements 100 zu begrenzen.

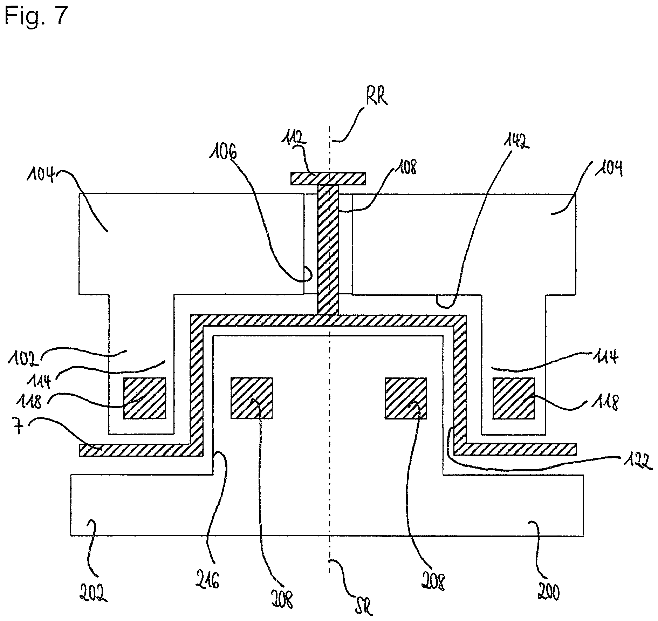

**Figur 7** zeigt eine weitere Ausführungsform, in der das Statorgehäuse 202 der Antriebsvorrichtung 200 keine Statorvertiefung 204 aufweist, sondern einen Statorvorsprung 216. Die Behälterwandung 7 der Mischvorrichtung 1 weist entsprechend eine Wandvertiefung 122 auf, die im Gegensatz zu den übrigen gezeigten Ausführungsformen, nach innen zu dem Innenraum 5 der Mischvorrichtung 1 hin, ausgebildet ist. Der Statorvorsprung 216 ragt in diese Wandvertiefung 122, wenn die Mischvorrichtung 1 auf die Antriebsvorrichtung 200 aufgesetzt ist. Bei dem gezeigten Abschnitt der Behälterwandung 7 handelt es sich lediglich um den Teilbereich der Behälterwandung 7, an dem das Rührelement 100 angeordnet ist.

Entsprechend weist auch der Basiskörper 102 des Rührelements 100 eine Basiskörpervertiefung 142 auf, die entsprechend des Statorvorsprungs 216 ausgebildet ist. Im zusammengesetzten Zustand ragt dann der Statorvorsprung 216 in die Basiskörpervertiefung 142. Die Polvorsprünge 114 zusammen mit den nicht-permanentmagnetisierten Elemente 118 ragen außerdem zu der Rührelement-Rotationsachse RR hin, so dass die Paare von Polvorsprüngen 114 entgegen der übrigen Ausführungsformen nun einander gegenüberliegen bezüglich der Rührelement-Rotationsachse RR.

Vorzugsweise sind der Statorvorsprung 216, die Wandvertiefung 122 und die Basiskörpervertiefung 142 zylindrisch ausgebildet und weisen eine gemeinsame Rotationsachse auf.

Entgegen der vorangehenden Ausführungsformen sind die Spulen 208 in dem Statorvorsprung 216 angeordnet, so dass die nicht-permanentmagnetisierten Elemente 118 der Mischvorrichtung 1 die Spulen 1 umgeben. In allen Fällen sind die Spulen 208 jedoch benachbart zu den nicht-permanentmagnetisierten Elemente 118 der Mischvorrichtung 1 angeordnet.

**Figur 7** zeigt bezüglich dieser Ausführungsform eine Schnittansicht durch das Rührelement 100, die Behälterwandung 7 und die Antriebsvorrichtung 200 im zusammengesetzten Zustand senkrecht zur Rührelement-Rotationsachse RR bzw. der Statorgehäuse-Rotationsachse SR durch ein Paar von Polvorsprüngen 114.

Obwohl in keinen der Figuren gezeigt, ist es außerdem möglich, dass die Spulen 208 nicht nur in einer Ebene bezüglich der Statorgehäuse-Rotationsachse SR angeordnet sind, sondern in mehreren (axial entlang der Statorgehäuse-Rotationsachse SR versetzen) Ebenen.

Weiterhin wird darauf hingewiesen, dass obwohl die einzelnen Ausführungsformen mit Polvorsprüngen 114 gezeigt sind, diese eine bevorzugte Ausführungsform darstellen. Eine Anordnung der nicht-permanentmagnetisierten Elemente 118 kann ohne die Polvorsprünge 114 dann, wie bezüglich Figur 2b) beschrieben, erfolgen.

### Bezugszeichenliste

- 1: Mischvorrichtung
- 3: Behälter
- 5: Innenraum
- 7: Behälterwandung

- 100: Rührelement
- 102: Basiskörper
- 104: Flügelelement
- 106: Basiskörper-Durchtrittsloch
- 108: Lagerstab
- 110: erstes freies Ende des Lagerstabs
- 112: Begrenzungselement
- 114: Polvorsprung
- 114a: erstes Paar von Polvorsprüngen
- 114b: zweites Paar von Polvorsprüngen
- 116: Mantelfläche
- 118: nicht-permanentmagnetisiertes Element
- 120: zweites freies Ende des Lagerstabs
- 122: Wandvertiefung
- 124: Boden-Kugellager
- 126: Wandvertiefungs-Bodenfläche
- 128: Außenring
- 130: Innenring
- 132: rollendes Element
- 134: Lagerstab-Kugellager
- 136: Verrastungselement
- 138: Rasthaken
- 140: herausragendes Teilstück des Lagerstabs
- 142: Basiskörpervertiefung
- 200: Antriebsvorrichtung
- 202: Statorgehäuse
- 204: Statorvertiefung
- 206: Vertiefungswandung
- 208: Spule
- 210: Statorvertiefungs-Bodenfläche
- 212: Lagerstabvertiefung
- 214: Lagerungsspule
- 216: Statorvorsprung

- RR: Rührelement-Rotationsachse
- SR: Statorgehäuse-Rotationsachse

## Patentansprüche

1. Mischvorrichtung (1) mit einem Rührelement (100) umfassend:
- einen Behälter (3) zum Aufnehmen von Fluiden und/oder Feststoffen;
- zumindest ein rotierbares Rührelement (100) zum Mischen der Fluide und/oder Feststoffe;
- zumindest ein Lagerelement zum Lagern des Rührelements (100), wobei das Lagerelement als Lagerstab (108) ausgebildet ist, welcher in einen Innenraum (5) des Behälters (3) vorragt und in das Rührelement (100) zumindest teilweise einsetzbar ist, um als Drehlager zu wirken;
wobei das Rührelement (100) einen Basiskörper (102) und eine Vielzahl von Flügelelementen (104) umfasst, welche an dem Basiskörper (102) angeordnet sind und dazu ausgelegt sind, die Fluide und/oder Feststoffe in dem Behälter (3) durch Rotation des Rührelements (100) zu mischen,
wobei der Basiskörper (102) an einer Mantelfläche (116) des Basiskörpers (102) zumindest ein Paar von Polvorsprüngen (114) aufweist, welche an entgegengesetzten Seiten des Basiskörpers (102) angeordnet sind, und
wobei das Rührelement (100) zumindest ein nicht-permanentmagnetisiertes Element (118) umfasst, um durch von außen induzierte Reluktanzkräfte in Rotationsbewegung versetzbar zu sein, wobei zumindest in den Polvorsprüngen (114) jeweils eines der nicht-permanentmagnetisierten Elemente (118) angeordnet ist, **dadurch gekennzeichnet, dass** zumindest ein Lagerstab-Kugellager (134) zwischen dem Lagerstab (108) und dem Basiskörper (102) und/oder den Flügelelementen (104) eingesetzt ist.

2. Mischvorrichtung (1) nach Anspruch 1, wobei der Basiskörper (102) im Wesentlichen zylindrisch ausgebildet ist.

3. Mischvorrichtung (1) nach einem der Ansprüche 1 bis 2, wobei der Behälter (3) zumindest eine zylindrische Wandvertiefung (122) aufweist, in welche zumindest teilweise der Basiskörper (102) des Rührelements (100) eingesetzt ist.

4. Mischvorrichtung (1) nach Anspruch 3, wobei zumindest ein Wandflächenbereich des Behälters (3), in dem die Wandvertiefung (122) angeordnet ist, starr ausgebildet ist.

5. Mischvorrichtungssystem umfassend:
- eine Mischvorrichtung (1) gemäß einem der Ansprüche 1 bis 4;
- eine Antriebsvorrichtung (200) zum Antreiben eines Rührelements (100) in einer Mischvorrichtung (1), umfassend:
- ein Statorgehäuse (202), auf dem die Mischvorrichtung (1) mit zu mischenden Fluiden und/oder Feststoffen aufsetzbar ist;
- zumindest zwei Paar von stromdurchströmbaren Spulen (208), welche bezüglich einer Statorgehäuse-Rotationsachse (SR) paarweise gegenüberliegend angeordnet sind; und
- eine Steuervorrichtung, die dazu ausgelegt ist, dass die Paare von Spulen (208) nacheinander von Strom durchströmt werden, so dass durch im Rührelement (100) induzierte Reluktanzkräfte das Rührelement (100) der Mischvorrichtung(1) antreibbar ist; und
wobei eine Rührelement-Rotationsachse (RR) und die Statorgehäuse-Rotationsachse (SR) identisch sind.

6. Mischvorrichtungssystem gemäß Anspruch 5, wobei die Anzahl der Paare von Spulen (208) in der Antriebsvorrichtung (200) größer ist als die Anzahl der Paare von Polvorsprüngen (114).

7. Mischvorrichtungssystem nach einem der Ansprüche 5 bis 6, wobei die Rotationsachsen der Spulen (208) die Statorgehäuse-Rotationsachse (SR) im Wesentlichen senkrecht schneiden.

8. Mischvorrichtungssystem nach einem der Ansprüche 5 bis 7, wobei das Statorgehäuse (202) eine Statorvertiefung (204) aufweist, in welche das Rührelement (100) der Mischvorrichtung(1) einsetzbar ist,
wobei die Spulen (208) zumindest teilweise in einer Vertiefungswandung (206) angeordnet sind, die die Statorvertiefung (204) in seitlicher Richtung entlang der Statorgehäuse-Rotationsachse (SR) begrenzt.

9. Verfahren zum Antreiben eines Rührelements (100) in einer Mischvorrichtung (1), umfassend:
- Bereitstellen einer Mischvorrichtung (1) gemäß einem der Ansprüche 1 bis 4;
- Bereitstellen einer Antriebsvorrichtung (200) zum Antreiben des Rührelements (100) mit Paaren von Spulen (208), welche bezüglich einer Antriebsvorrichtungs-Rotationsachse (SR) gegenüberliegend angeordnet sind; und
- Aufsetzen der Mischvorrichtung (1) auf die Antriebsvorrichtung (200), so dass, wenn die Paare von Spulen (208) sequenziell von Strom durchströmt werden, Reluktanzkräfte auf das Rührelement (100) einwirken und dieses in Rotation versetzen.

## Claims

1. Mixing device (1) having a stirring element (100) comprising:
- a container (3) for accommodating fluids and/or solids;
- at least one rotatable stirring element (100) for mixing the fluids and/or solids;
- at least one bearing element for mounting the stirring element (100), wherein the bearing element is a bearing rod (108) that protrudes into an inner space (5) of the container (3) and that can be inserted at least partially into the stirring element (100) to work as a pivot bearing;
wherein the stirring element (100) comprises a base body (102) and a plurality of blade elements (104) which are arranged on the base body (102) and configured to mix the fluids and/or solids in the container (3) by rotation of the stirring element (100),
wherein the base body (102) comprises, on a lateral surface (116) of the base body (102), at least one pair of pole protrusions (114) that are arranged on opposite sides of the base body (102), and
wherein the stirring element (100) comprises at least one non-permanently magnetized element (118), so that the stirring element can be set in rotation by reluctance forces induced from outside, wherein at least in the pole protrusions (114) in each case one of the non-permanently magnetized elements (118) is arranged, **characterized in that** at least one bearing rod-ball bearing (134) is inserted between the bearing rod (108) and the base body (102) and/or the blade elements (104).

2. The mixing device (1) according to claim 1, wherein the base body (102) is substantially cylindrical.

3. The mixing device (1) according to any of claims 1 to 2, wherein the container (3) has at least one cylindrical wall recess (122) in which the base body (102) of the stirring element (100) is at least partially inserted.

4. The mixing device (1) according to claim 3, wherein at least one wall surface area of the container (3) in which the wall recess (122) is arranged is rigid.

5. A mixing device system comprising:
- a mixing device (1) according to any of claims 1 to 4;
- a drive device (200) for driving a stirring element (100) in a mixing device (1), comprising:
- a stator housing (202) on which the mixing device (1) with fluids or solids to be mixed can be attached;
- at least two pairs of coils (208) through which current can flow and that are arranged in pairs on opposite sides with respect to a stator housing rotation axis (SR); and
- a control device designed so that current flows successively through the pair of coils (208) so that the stirring element (100) of the mixing device (1) can be driven by reluctance forces induced in the stirring element (100); and
wherein a stirring element rotation axis (RR) and the stator housing rotation axis (SR) are identical.

6. The mixing device system according to claim 5, wherein the number of pairs of coils (208) in the drive device (200) is greater than the number of pairs of pole protrusions (114) .

7. The mixing device system according to any of claims 5 to 6, wherein the rotation axes of the coils (208) intersect the stator housing rotation axis (SR) substantially perpendicularly.

8. The mixing device system according to any of claims 5 to 7, wherein the stator housing (202) has a stator recess (204), into which the stirring element (100) of the mixing device (1) can be inserted,
wherein the coils (208) are arranged at least partially in a recess wall (206) that limits the stator recess (204) in lateral direction along the stator housing rotation axis (SR).

9. A method for driving a stirring element (100) in a mixing device (1), comprising:
- providing a mixing device (1) according to any of claims 1 to 4;
- providing a drive device (200) for driving the stirring element (100) with pairs of coils (208) arranged on opposite sides with respect to a drive device rotation axis (SR); and
- attaching the mixing device (1) onto the drive device (200), so that, when current flows sequentially through the pairs of coils (208), reluctance forces act on the stirring element (100) and set it into rotation.

## Revendications

1. Dispositif mélangeur (1) avec un élément agitateur (100) comprenant :
- un contenant (3) pour recevoir des fluides et/ou matières solides ;
- au moins un élément agitateur (100) rotatif pour mélanger les fluides et/ou matières solides ;
- au moins un élément d'appui servant d'appui à l'élément agitateur (100), dans lequel l'élément d'appui est réalisé sous la forme d'une barre d'appui (108), laquelle fait saillie dans un espace intérieur (5) du contenant (3) et peut être insérée au moins en partie dans l'élément agitateur (100), afin d'agir comme palier rotatif ;
dans lequel l'élément agitateur (100) comprend un corps de base (102) et une pluralité d'éléments ailettes (104), lesquels sont disposés sur le corps de base (102) et sont conçus pour mélanger les fluides et/ou matières solides dans le contenant (3) par rotation de l'élément agitateur (100),
dans lequel le corps de base (102) présente sur une surface d'enveloppe (116) du corps de base (102) au moins une paire de parties saillantes polaires (114), lesquelles sont disposées sur des côtés opposés du corps de base (102), et
dans lequel l'élément agitateur (100) comprend au moins un élément non magnétisé en permanence (118), afin de pouvoir être amené en mouvement de rotation par des forces de réluctance induites de l'extérieur, dans lequel respectivement un des éléments non magnétisés en permanence (118) est disposé au moins dans les parties saillantes polaires (114), **caractérisé en ce qu'**au moins un roulement à billes de barre d'appui (134) est inséré entre la barre d'appui (108) et le corps de base (102) et/ou les éléments ailettes (104).

2. Dispositif mélangeur (1) selon la revendication 1, dans lequel le corps de base (102) est réalisé de manière sensiblement cylindrique.

3. Dispositif mélangeur (1) selon l'une quelconque des revendications 1 à 2, dans lequel le contenant (3) présente au moins un évidement de paroi cylindrique (122), dans lequel le corps de base (102) de l'élément agitateur (100) est inséré au moins en partie.

4. Dispositif mélangeur (1) selon la revendication 3, dans lequel au moins une zone de surface de paroi du contenant (3), dans laquelle l'évidement de paroi (122) est disposé, est réalisée de manière rigide.

5. Système de dispositif mélangeur comprenant :
- un dispositif mélangeur (1) selon l'une quelconque des revendications 1 à 4 ;
- un dispositif d'entraînement (200) destiné à entraîner un élément agitateur (100) dans un dispositif mélangeur (1), comprenant :
- un carter de stator (202), sur lequel le dispositif mélangeur (1) avec des fluides et/ou matières solides à mélanger peut être mis en place ;
- au moins deux paires de bobines (208) pouvant être traversées par du courant, lesquelles sont disposées à l'opposé par paires par rapport à un axe de rotation de carter de stator (SR) ; et
- un dispositif de commande, qui est conçu pour que les paires de bobines (208) soient traversées successivement par du courant, de sorte que l'élément agitateur (100) du dispositif mélangeur (1) peut être entraîné par des forces de réluctance induites dans l'élément agitateur (100) ; et
dans lequel un axe de rotation d'élément agitateur (RR) et l'axe de rotation de carter de stator (SR) sont identiques.

6. Système de dispositif mélangeur selon la revendication 5, dans lequel le nombre des paires de bobines (208) dans le dispositif d'entraînement (200) est plus grand que le nombre des paires de parties saillantes polaires (114).

7. Système de dispositif mélangeur selon l'une quelconque des revendications 5 à 6, dans lequel les axes de rotation des bobines (208) coupent sensiblement verticalement l'axe de rotation de carter de stator (SR).

8. Système de dispositif mélangeur selon l'une quelconque des revendications 5 à 7, dans lequel le carter de stator (202) présente un évidement de stator (204), dans lequel l'élément agitateur (100) du dispositif mélangeur (1) peut être inséré,
dans lequel les bobines (208) sont disposées au moins en partie dans une paroi d'évidement (206), qui délimite l'évidement de stator (204) dans la direction latérale le long de l'axe de rotation de carter de stator (SR).

9. Procédé pour entraîner un élément agitateur (100) dans un dispositif mélangeur (1), comprenant :
- la fourniture d'un dispositif mélangeur (1) selon l'une quelconque des revendications 1 à 4 ;
- la fourniture d'un dispositif d'entraînement (200) pour l'entraînement de l'élément agitateur (100) avec des paires de bobines (208), lesquelles sont disposées à l'opposé par rapport à un axe de rotation de dispositif d'entraînement (SR) ; et
- la mise en place du dispositif mélangeur (1) sur le dispositif d'entraînement (200), de sorte que, lorsque les paires de bobines (208) sont traversées de manière séquentielle par du courant, des forces de réluctance agissent sur l'élément agitateur (100) et amènent celui-ci en rotation.
